# EUROPEAN PATENT APPLICATION

(11) **EP 4 697 421 A1**
(43) Date of publication of application: **18.02.2026**
(21) Application number: 25193127.5
(22) Date of filing: 31.07.2025
(51) Int. Cl.: H01M 10/04, H01M 50/46, H01M 50/105, H01M 50/124

(54) **SECONDARY BATTERY AND METHOD FOR MANUFACTURING THE SAME**

(30) Priority: 13.08.2024 KR 20240108658
(71) Applicant: SAMSUNG SDI CO., LTD., Yongin-si, Gyeonggi-do 17084 (KR)
(72) Inventor: JIN, Sukyung, Yongin-Si (KR)
(74) Representative: Maiwald GmbH

(57) **Abstract**

A secondary battery (100), including an electrode assembly (110) including a first electrode plate, a second electrode plate having a different polarity from the first electrode plate, and a separator (116) between the first electrode plate and the second electrode plate, a case (130) accommodating the electrode assembly (110) therein, and an adhesive (150) with a predetermined pattern (160a, 160b, 162a, 162b, 164a, 164b) on at least one surface of the electrode assembly (110).

## Description

### BACKGROUND

### 1. Field

Embodiments relate to a secondary battery and a method for manufacturing a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries may be classified into a cylindrical type, a square type, or a pouch type depending on a shape of a case, and may be classified into a polymer electrolyte type or a non-aqueous electrolyte type depending on an electrolyte used.

The above information disclosed in this Background section is for enhancement of understanding of the background of the present disclosure, and therefore, it may contain information that does not constitute related (or prior) art.

### SUMMARY

Embodiments include a secondary battery, including an electrode assembly including a first electrode plate, a second electrode plate having a different polarity from the first electrode plate, and a separator between the first electrode plate and the second electrode plate, a case accommodating the electrode assembly therein, and an adhesive in a predetermined pattern on at least one surface of the electrode assembly.

The predetermined pattern may include a circular pattern.

The circular pattern may include a plurality of circles, each of the plurality of circles having a different diameter and a same center.

The predetermined pattern may include a square pattern.

The predetermined pattern may include a triangular pattern.

A melting point of the adhesive may be greater than or equal to 77°C and less than or equal to 83°C.

The first electrode plate may include a plurality of positive electrode plates, the second electrode plate may include a plurality of negative electrode plates, and the electrode assembly may be formed by stacking (e.g., may have a stacked structure including) the plurality of positive electrode plates, the plurality of negative electrode plates, the separator being bent in a zigzag shape and interposed between the plurality of positive electrode plates and the plurality of negative electrode plates along a thickness direction thereof.

Any one of the plurality of positive electrode plates may be at an outmost edge of the electrode assembly.

The adhesive may be on two surfaces of the electrode assembly.

The predetermined pattern may not overlap itself.

The secondary battery may further include a first electrode tab extending in a predetermined direction on the first electrode plate, and a second electrode tab extending in the predetermined direction on the second electrode plate, wherein the adhesive is on at least one surface of the electrode assembly except for regions corresponding to the first electrode tab and the second electrode tab.

The secondary battery may further include a tape covering at least a part of the electrode assembly, wherein the adhesive is on at least one surface of the electrode assembly except for a region corresponding to the tape.

Embodiments include a method for manufacturing a secondary battery, the method including preparing an electrode assembly and a case, the electrode assembly including a first electrode plate, a second electrode plate having a different polarity from the first electrode plate, and a separator between the first electrode plate and the second electrode plate, applying an adhesive in a predetermined pattern on at least one surface of the electrode assembly, accommodating the electrode assembly in the case, and pressing the case, the adhesive, and the electrode assembly together.

The predetermined pattern may include a circular pattern.

The circular pattern may include a plurality of circles, each of the plurality of circles having a different diameter and a same center.

The predetermined pattern may include a square pattern.

The predetermined pattern may include a triangular pattern.

Applying the adhesive may include applying the adhesive on two surfaces of the electrode assembly.

Applying the adhesive may include applying the adhesive to not overlap itself.

A melting point of the adhesive may be greater than or equal to 77°C and less than or equal to 83°C.

However, aspects and features of the present disclosure are not limited to those described above, and other aspects and features not mentioned will be clearly understood by a person of ordinary skill in the art from the detailed description, described below.

### BRIEF DESCRIPTION OF DRAWINGS

Features will become apparent to those of ordinary skill in the art by describing in detail exemplary embodiments with reference to the attached drawings, in which:
FIG. 1 is a diagram illustrating an example of a secondary battery according to one or more embodiments of the present disclosure;
FIG. 2 is a diagram illustrating an example of a secondary battery on which an adhesive is applied according to one or more embodiments of the present disclosure;
FIG. 3 is a diagram for describing the pattern in which the adhesive is applied according to one or more embodiments of the present disclosure;
FIG. 4 is a diagram for describing the pattern in which the adhesive is applied according to one or more embodiments of the present disclosure;
FIG. 5 is a diagram for describing the pattern in which the adhesive is applied according to one or more embodiments of the present disclosure;
FIG. 6 is a diagram for describing an electrode assembly according to one or more embodiments of the present disclosure;
FIG. 7 is a diagram for describing an application region of the adhesive according to one or more embodiments of the present disclosure;
FIG. 8 is a diagram for describing the application region of the adhesive according to one or more embodiments of the present disclosure;
FIG. 9 is a flowchart for describing a method for manufacturing a secondary battery according to one or more embodiments of the present disclosure; and
FIG. 10 is a diagram for describing a step of pressing a case, an adhesive, and an electrode assembly according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. **In** addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. For example, "and/or" includes any or all combinations of a plurality of items enumerated. When "C to D" is stated, it means C or more and D or less, unless otherwise specified.

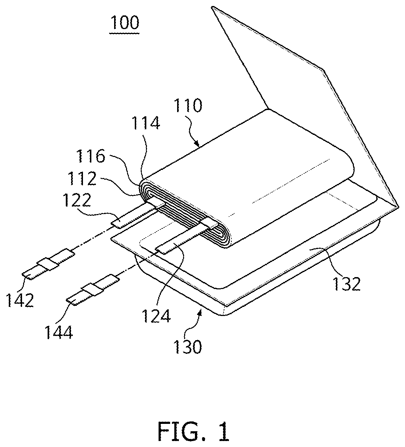

FIG. 1 is a diagram illustrating an example of a secondary battery according to one or more embodiments of the present disclosure. As shown in FIG. 1, secondary battery 100 includes an electrode assembly 110 and a case 130 accommodating the electrode assembly 110.

The electrode assembly 110 includes a negative electrode plate 112 as a first electrode plate, a positive electrode plate 114 as a second electrode plate, and a separator 116 interposed therebetween. The negative electrode plate 112 may include a negative electrode tab 122 electrically connected to a negative electrode uncoated portion, and the positive electrode plate 114 may include a positive electrode tab 124 electrically connected to a positive electrode uncoated portion. The negative electrode tab 122 and the positive electrode tab 124 are respectively welded to a negative electrode lead 142 and a positive electrode lead 144 of an external terminal to be electrically connected to the outside. A tab film for insulation from the case 130 is attached to the negative electrode lead 142 and the positive electrode lead 144.

In a state in which the electrode assembly 110 is accommodated in the case 130, sealing parts 132 of edges of the case 130 come into contact with each other (e.g., the sealing parts 132 around the periphery of the bottom portion of the case 130 come into contact with a corresponding peripheral area of the top potion (e.g., a cover) of the case 130) to be sealed. The sealing is performed in a state in which the tab film is disposed between the sealing parts 132. The sealing parts 132 may be made of a heat-fusible material and may have a structure in which sealing is achieved by bonding heat-fusible layers to each other.

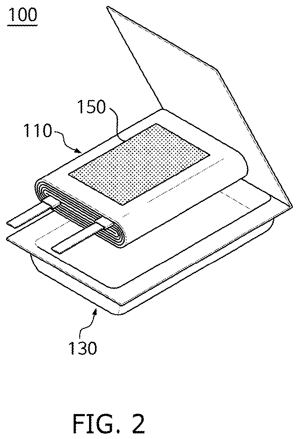

FIG. 2 is a diagram illustrating an example of a secondary battery on which an adhesive is applied according to one or more embodiments of the present disclosure. Referring to FIG. 2, the secondary battery 100 according to one or more embodiments of the present disclosure may include the electrode assembly 110, the case 130 that accommodates the electrode assembly 110, and an adhesive 150 applied to the electrode assembly 110.

In one or more embodiments, the adhesive 150 may be applied to at least one surface of the electrode assembly 110. In one or more embodiments, the at least one surface of the electrode assembly 110 on which the adhesive 150 is applied may be an outer surface of the electrode assembly 110. For example, when the electrode assembly 110 is accommodated inside the case 130, the adhesive 150 may be applied to at least one surface of the electrode assembly 110 facing outward. Accordingly, when an upper cover of the case 130 covers the electrode assembly 110, the adhesive 150 applied on at least one surface of the electrode assembly 110 may fix the electrode assembly 110 and the case 130. In other embodiments, the adhesive 150 may be applied to an inner surface of the electrode assembly 110. In one or more embodiments, when the electrode assembly 110 is accommodated inside the case 130, the adhesive 150 may be applied to at least one surface of the electrode assembly 110 facing inward.

In one or more embodiments, the adhesive 150 may be applied in a predetermined pattern on at least one surface of the electrode assembly 110. In one or more embodiments, the predetermined pattern may include a circular pattern, a triangular pattern, a square pattern, or a polygonal pattern. With a configuration in which the adhesive 150 is applied in the predetermined pattern to the electrode assembly 110, the adhesive 150 can be uniformly applied to the electrode assembly 110. As a result, the application quality of the adhesive 150 can be improved, and air bubbles that may occur in a region where the adhesive 150 is applied in an overlapping manner can be prevented.

In one or more embodiments, the adhesive 150 may be applied to one surface or both facing surfaces of the electrode assembly 110. For example, the adhesive 150 may be applied to an outer surface of the electrode assembly 110. As another example, the adhesive 150 may be applied to the inner surface of the electrode assembly 110. As another example, the adhesive 150 may be applied on the outer surface and the inner surface of the electrode assembly 110. When the adhesive 150 is applied on both surfaces of the electrode assembly 110, the electrode assembly 110 and the case 130 may be more strongly fixed compared to a case where the adhesive 150 is applied to the electrode assembly 110.

In one or more embodiments, the adhesive 150 may be applied to not overlap itself. The adhesive 150 may be applied in a predetermined pattern in a state of not overlapping itself. With a configuration in which the adhesives 150 do not to overlap each other (e.g., a single layer), the adhesive 150 can be uniformly applied on at least one surface of the electrode assembly 110. As a result, the application quality of the adhesive 150 can be improved, and air bubbles that may occur in a region where the adhesive 150 is applied in an overlapping manner can be prevented.

In one or more embodiments, a melting point of the adhesive 150 may be greater than or equal to 77°C and less than or equal to 83°C, though other melting points may be possible. The adhesive 150 having the melting point within the above temperature range is applied, and thus, the adhesive strength of the adhesive 150 may be maintained even if a temperature of the secondary battery 100 rises during a procedure of charging and/or discharging the secondary battery 100.

In FIG. 2, although it is illustrated that the adhesive 150 is applied to a portion of the outer surface of the electrode assembly 110, the adhesive 150 may be disposed on the entire outer surface of the electrode assembly 110, at least a part of a front surface and/or a back surface of the electrode assembly 110. As another example, the adhesive 150 may be disposed on at least a part of a top portion or a bottom portion of the electrode assembly 110.

In FIG. 2, although it has been illustrated that the adhesive 150 is applied to a square-shaped region, the adhesive 150 may be applied to a region having a shape such as a polygon, circle, or ellipse.

In FIG. 2, although it has been illustrated that the adhesive 150 is applied in a form of a surface, the adhesive 150 may be applied to the electrode assembly 110 in a form of a dot array with a predetermined interval. Accordingly, the adhesive 150 may be applied in a form of dots at predetermined intervals from an adhesive application nozzle to form lines and/or surfaces. In the present disclosure, the adhesive 150 may be applied while forming a predetermined pattern, and thus, the adhesive may not form an overlapping region with itself even though the adhesive is applied in the form of the dot array (because the dots are spaced apart by the predetermined interval).

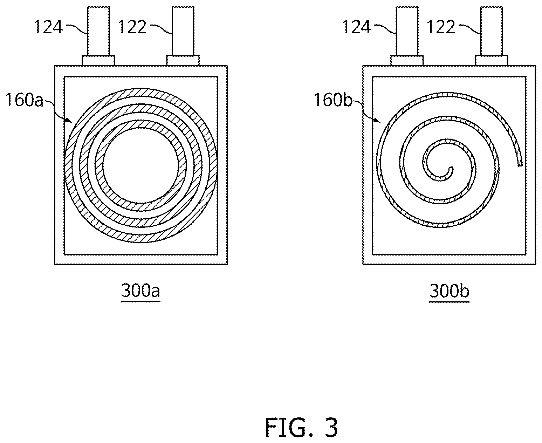

FIG. 3 is a diagram for describing a pattern in which the adhesive is applied according to one or more embodiments of the present disclosure. The diagram illustrated in FIG. 3 may correspond to a plan view of the electrode assembly of FIG. 2 viewed from above. In one or more embodiments, the upper surface of the electrode assembly may mean a surface of the electrode assembly on which the adhesive is applied with reference to FIG. 2. In other embodiments, the upper surface of the electrode assembly may mean a surface facing the upper cover of the case.

Referring to FIG. 3, the adhesive according to one or more embodiments of the present disclosure may be applied in a circular pattern on the upper surface of the electrode assembly. In one or more embodiments, the circular pattern may mean a pattern formed by a set of multiple circles with different diameters and the same center (e.g., concentric circles). Referring to a first example 300a, the adhesive may be applied to the electrode assembly in a first circular pattern 160a. In FIG. 3, although it is illustrated that the number of circles included in the first circular pattern 160a is three, the number of circles included in the first circular pattern 160a may vary depending on a size of the electrode assembly or an application amount of adhesive sprayed from the nozzle. In FIG. 3, although it is illustrated that a perfect circle is formed by the adhesive applied in the first circular pattern 160a, the circle formed by the adhesive applied in the first circular pattern 160a may be formed in a substantially circular shape even though the circle is not a perfect circle.

Referring to a second example 300b, the adhesive according to one or more embodiments of the present disclosure may be applied in a second circular pattern 160b on the upper surface of the electrode assembly. In one or more embodiments, the second circular pattern 160b may mean a pattern in which a starting point where the application of the adhesive is started and an ending point where the application of the adhesive is ended are connected as one while including the circular pattern, as illustrated in FIG. 3. For example, the adhesive may be applied continuously from when the application of the adhesive is started to when until the application of the adhesive is ended. The overlapping region of the adhesive can be minimized by applying the adhesive continuously to at least one surface of the electrode assembly and simultaneously applying the adhesive in the circular pattern.

In FIG. 3, thicknesses of the adhesives in the first example 300a and the second example 300b are expressed differently, but this expression is only intended to express the thickness difference according to physical properties of the adhesive and/or characteristics of the electrode assembly, and does not mean the thickness difference of the adhesives according to the application of the first circular pattern 160a or the second circular pattern 160b. For example, unlike FIG. 3, the thickness of the adhesive applied in the first circular pattern 160a and the thickness of the adhesive applied in the second circular pattern 160b may be the same, or the thickness of the adhesive applied in the first circular pattern 160a may be less than the thickness of the adhesive applied in the second circular pattern 160b.

With this configuration, because the adhesive can be uniformly applied to the electrode assembly, a probability of an adhesion failure of the secondary battery can be reduced. The overlapping region of the adhesive is minimized, and thus, a phenomenon in which the thickness of the electrode assembly is increased due to the overlapping of the adhesive can be prevented. As a result, an energy density of the secondary battery can be improved.

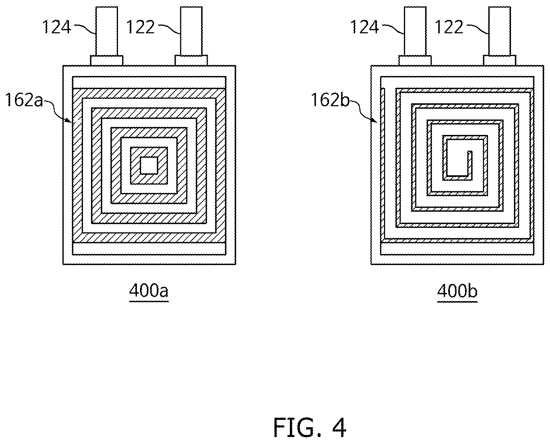

FIG. 4 is a diagram for describing a pattern in which the adhesive is applied according to one or more embodiments of the present disclosure. The diagram illustrated in FIG. 4 may correspond to a plan view of the electrode assembly of FIG. 2 viewed from above. In one or more embodiments, the upper surface of the electrode assembly may mean a surface of the electrode assembly on which the adhesive is applied with reference to FIG. 2. In other embodiments, the upper surface of the electrode assembly may mean a surface facing the upper cover of the case.

Referring to FIG. 4, the adhesive according to one or more embodiments of the present disclosure may be applied in a square pattern on the upper surface of the electrode assembly. In one or more embodiments, the square pattern may mean a pattern formed by a set of multiple (concentric) squares. Referring to a first example 400a, the adhesive may be applied to the electrode assembly in a first square pattern 162a. In FIG. 4, although it has been illustrated that the number of squares included in the first square pattern 162a is four, the number of squares included in the first square pattern 162a may vary depending on the size of the electrode assembly or the application amount of adhesive sprayed from the nozzle. In FIG. 4, although it is illustrated that a perfect square is formed by the adhesive applied in the first square pattern 162a, the square formed by the adhesive applied in the first square pattern 162a may be formed in a substantially square shape other than a perfect square.

Referring to a second example 400b, the adhesive according to one or more embodiments of the present disclosure may be applied in a second square pattern 162b on the upper surface of the electrode assembly. In one or more embodiments, the second square pattern 162b may mean a pattern in which a starting point where the application of the adhesive is started and an ending point where the application of the adhesive is ended are connected as one while including the square pattern, as illustrated in FIG. 4. For example, the adhesive may be applied continuously from when the application of the adhesive is started to when until the application of the adhesive is ended. The overlapping region of the adhesive can be minimized by continuously applying the adhesive to the electrode assembly and simultaneously applying the adhesive in the square pattern.

In FIG. 4, thicknesses of the adhesive in the first example 400a and the second example 400b are expressed differently, but this expression is only intended to express the thickness difference according to physical properties of the adhesive and/or characteristics of the electrode assembly, and does not mean the thickness difference of the adhesive according to the application of the first square pattern 162a or the second square pattern 162b. For example, unlike FIG. 4, the thickness of the adhesive applied in the first square pattern 162a and the thickness of the adhesive applied in the second square pattern 162b may be the same, or the thickness of the adhesive applied in the first square pattern 162a may be less than the thickness of the adhesive applied in the second square pattern 162b.

With this configuration, because the adhesive can be uniformly applied to the electrode assembly, a probability of an adhesion failure of the secondary battery can be reduced. The overlapping region of the adhesive is minimized, and thus, a phenomenon in which the thickness of the electrode assembly is increased due to the overlapping of the adhesive can be prevented. As a result, an energy density of the secondary battery can be improved.

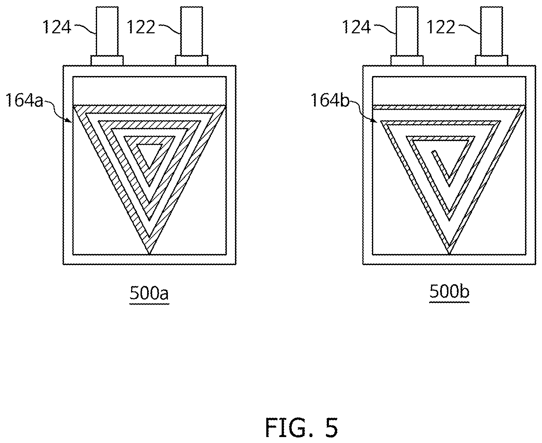

FIG. 5 is a diagram for describing a pattern in which an adhesive is applied according to one or more embodiments of the present disclosure. The diagram illustrated in FIG. 5 may correspond to a plan view of the electrode assembly of FIG. 2 viewed from above.

Referring to FIG. 5, the adhesive according to one or more embodiments of the present disclosure may be applied in the triangular pattern on the upper surface of the electrode assembly. In one or more embodiments, the triangular pattern may mean a pattern formed by a set of multiple (concentric) triangles. Referring to a first example 500a, the adhesive may be applied to the electrode assembly in a first triangular pattern 164a. In FIG. 5, although it has been illustrated that the number of triangles included in the first triangular pattern 164a is three, the number of triangles included in the first triangular pattern 164a may vary depending on the size of the electrode assembly or the application amount of adhesive sprayed from the nozzle. The triangle formed by the adhesive applied in the first triangular pattern 164a may be formed in a substantially triangular shape other than an equilateral triangle.

Referring to a second example 500b, the adhesive according to one or more embodiments of the present disclosure may be applied in a second triangular pattern 164b on the upper surface of the electrode assembly. In one or more embodiments, the second triangular pattern 164b may mean a pattern in which a starting point where the application of the adhesive is started and an ending point where the application of the adhesive is ended are connected as one while including the triangular pattern, as illustrated in FIG. 5. For example, the adhesive may be applied continuously from when the application of the adhesive is started to when until the application of the adhesive is ended. The overlapping region of the adhesive can be minimized by continuously applying the adhesive to the electrode assembly and simultaneously applying the adhesive in the triangular pattern.

In FIG. 5, thicknesses of the adhesive in the first example 500a and the second example 500b are expressed differently, but this expression is only intended to express the thickness difference according to physical properties of the adhesive and/or characteristics of the electrode assembly, and does not mean the thickness difference of the adhesive according to the application of the first triangular pattern 164a or the second triangular pattern 164b. For example, unlike FIG. 5, the thickness of the adhesive applied in the first triangular pattern 164a and the thickness of the adhesive applied in the second triangular pattern 164b may be the same, or the thickness of the adhesive applied in the first triangular pattern 164a may be less than the thickness of the adhesive applied in the second triangular pattern 164b.

With this configuration, because the adhesive can be uniformly applied to the electrode assembly, a probability of an adhesion failure of the secondary battery can be reduced. The overlapping region of the adhesive is minimized, and thus, a phenomenon in which the thickness of the electrode assembly is increased due to the overlapping of the adhesive can be prevented, As a result, an energy density of the secondary battery can be improved.

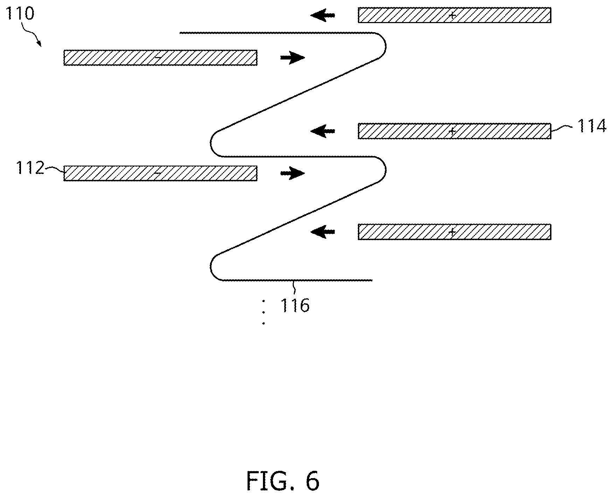

FIG. 6 is a diagram for describing the electrode assembly according to one or more embodiments of the present disclosure. As illustrated, the electrode assembly 110 may include a plurality of negative electrode plates 112, a plurality of positive electrode plates 114, and a separator 116 bent in a zigzag shape and interposed between the plurality of negative electrode plates 112 and the plurality of positive electrode plates 114.

In one or more embodiments, the electrode assembly 110 may be formed by stacking the plurality of negative electrode plates 112, the plurality of positive electrode plates 114, and the separator 116 bent in the zigzag shape and interposed between the plurality of negative electrode plates 112 and the plurality of positive electrode plates 114 along a thickness direction. As illustrated, the separator 116 may be bent in the zigzag shape, and the plurality of negative electrode plates 112 and the plurality of positive electrode plates 114 may be alternately inserted and stacked between the bent portions. For example, the plurality of negative electrode plates 112 and the plurality of positive electrode plates 114 may be inserted in directions of arrows illustrated in FIG. 6.

In one or more embodiments, any one of the plurality of positive electrode plates 114 may be positioned on an outmost edge of the electrode assembly 110.

In one or more embodiments, the negative electrode plate 112 may be formed by applying a negative electrode active material, such as graphite or carbon, to a negative electrode current collector plate made of a metal foil, such as copper, a copper alloy, nickel, or a nickel alloy, and may include a negative electrode tab (or first non-coated portion), which is a region where the negative electrode active material is not applied. The negative electrode tab may be a path for current flow between the negative electrode plate 112 and a negative electrode current collector. In some examples, the negative tab may be formed by cutting the negative electrode plate 112 to protrude to one side in advance when the negative electrode plate 112 is manufactured, and may further protrude to one side than the separator 116 without separate cutting.

In one or more embodiments, the positive electrode plate 114 may be formed by applying a positive electrode active material, such as a transition metal oxide, to a positive electrode current collector plate made of a metal foil, such as aluminum or an aluminum alloy, and may include a positive electrode tab (or second non-coated portion), which is a region where the positive electrode active material is not applied. The positive electrode tab may be a path for current flow between the positive electrode plate 114 and a positive electrode current collector. In some examples, the positive electrode tab may be formed by cutting the positive electrode plate 114 to protrude to the other side in advance when the positive plate is manufactured, and may further protrude to the other side than the separator 116 without separate cutting.

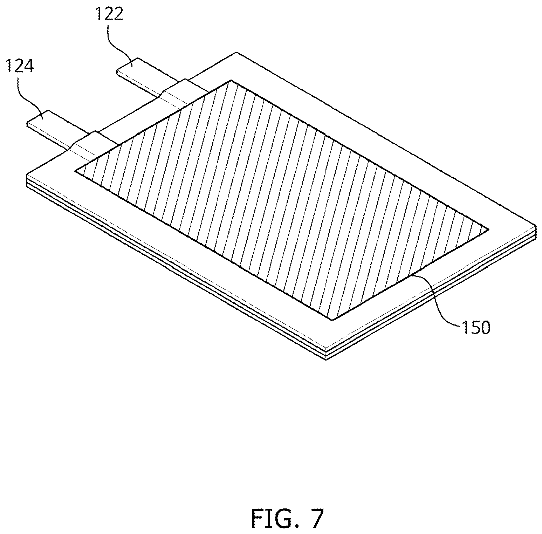

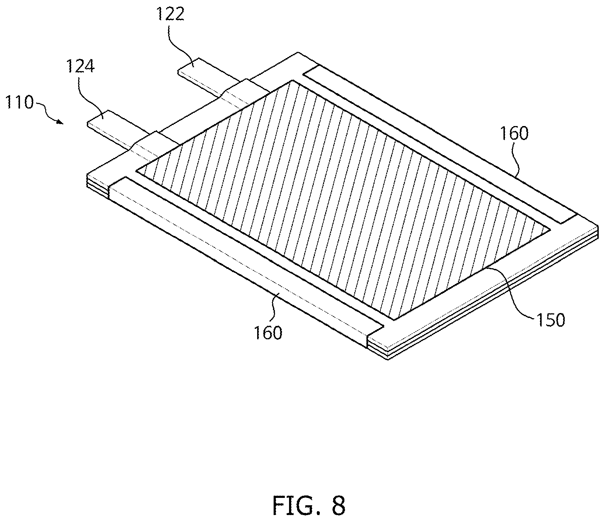

FIGS. 7 and 8 are diagrams for describing an application region of the adhesive according to one or more embodiments of the present disclosure. Referring to FIG. 7, the electrode assembly 110 according to one or more embodiments of the present disclosure may include a first electrode tab and a second electrode tab. Referring to FIG. 8, the electrode assembly 110 according to one or more embodiments of the present disclosure may further include a tape 160 covering at least a part of the electrode assembly 110.

In one or more embodiments, the negative electrode tab 122 may be disposed to extend in a predetermined direction on the negative electrode plate. Similarly, the positive electrode tab 124 may be disposed to extend in a predetermined direction on the positive electrode plate. In one or more embodiments, the adhesive may be applied to at least one surface of the electrode assembly 110 except for regions corresponding to the negative electrode tab 122 and the positive electrode tab 124. For example, referring to FIG. 7, a region of the electrode assembly 110 where the adhesive 150 may be applied is illustrated. As illustrated, the adhesive 150 may be applied to the electrode assembly 110 except for the regions corresponding to the negative electrode tab 122 and the positive electrode tab 124. In FIG. 7, although it has been illustrated that the region where the adhesive 150 is applied is a part of the outer surface of the electrode assembly 110, the adhesive 150 may be disposed on the entire outer surface of the electrode assembly 110 and at least a part of the front surface and/or the back surface of the electrode assembly 110 except for the regions corresponding to the negative electrode tab 122 and the positive electrode tab 124. As another example, the adhesive 150 may be disposed on at least a part of a top portion or a bottom portion of the electrode assembly 110. With this configuration, because the electrode tabs 122 and 124 and the adhesive 150 do not overlap each other, the thickness of the secondary battery can be prevented from increasing.

In one or more embodiments, the electrode assembly 110 may further include the tape 160 covering at least a part of the electrode assembly 110. In one or more embodiments, the adhesive 150 may be applied to at least one surface of the electrode assembly 110 except for a region corresponding to the tape 160. For example, referring to FIG. 8, a region of the electrode assembly 110 where the adhesive 150 may be applied is illustrated. In FIG. 8, although it has been illustrated that the tape 160 is positioned to cover side surfaces of the electrode assembly 110, the tape 160 may be positioned to cover an upper surface and/or a lower surface of the electrode assembly 110, and, in one or more embodiments, the adhesive 150 may be applied to the electrode assembly 110 except for the region corresponding to the tape 160.

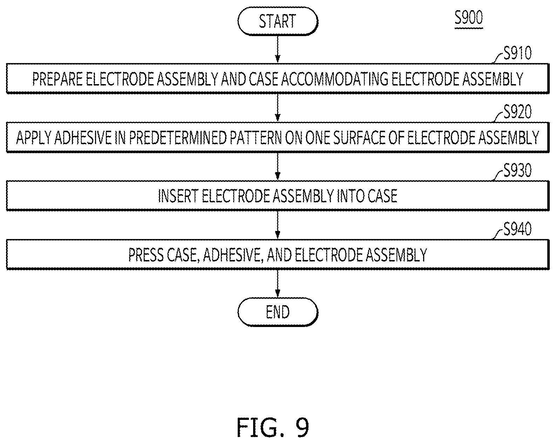

FIG. 9 is a flowchart for describing a method for manufacturing a secondary battery according to one or more embodiments of the present disclosure. Referring to FIG. 9, a secondary battery manufacturing method S900 may be initiated by preparing the electrode assembly and the case accommodating the electrode assembly (S910). In one or more embodiments, the electrode assembly may include the first electrode plate, the second electrode plate having a different polarity from the first electrode plate, and the separator interposed between the first electrode plate and the second electrode plate.

In one or more embodiments, the first electrode plate may include the plurality of positive electrode plates, the second electrode plate may include the plurality of negative electrode plates, and the electrode assembly may be formed by stacking the plurality of positive electrode plates, the plurality of negative electrode plates, and the separator bent in the zigzag shape and interposed between the plurality of positive electrode plates and the plurality of negative electrode plates along the thickness direction.

In one or more embodiments, any one of the plurality of positive electrode plates may be disposed on the outmost edge of the electrode assembly.

Thereafter, the adhesive may be applied in the predetermined pattern to the electrode assembly (S920).

In one or more embodiments, the predetermined pattern may include the circular pattern. In one or more embodiments, the circular pattern may include the set of multiple circles having different diameters and the same center. In one or more embodiments, the predetermined pattern may include the square pattern. In one or more embodiments, the predetermined pattern may include the triangular pattern.

In one or more embodiments, the melting point of the adhesive may be greater than or equal to 77°C and less than or equal to 83°C.

In one or more embodiments, a case where the adhesive is applied may include a case where the adhesive is applied at least one or on both facing surfaces of the electrode assembly.

In one or more embodiments, a case where the adhesive is applied may include a case where the adhesive is applied not to overlap each other (e.g., not to overlap itself).

In one or more embodiments, the first electrode tab may be disposed to extend in the predetermined direction on the first electrode plate, and the second electrode tab may be disposed to extend in the predetermined direction on the second electrode plate. In one or more embodiments, the adhesive may be applied to the electrode assembly except for the regions corresponding to the first electrode tab and the second electrode tab.

In one or more embodiments, the secondary battery may further include the tape covering at least a part of the electrode assembly, and the adhesive may be applied to at least one surface of the electrode assembly except for the region corresponding to the tape.

Thereafter, the electrode assembly may be inserted into the case (S930). Thereafter, the case, the adhesive, and the electrode assembly may be pressed (S940) (e.g., pressed together).

With a configuration in which the adhesive is formed in the predetermined pattern without overlapping each other (e.g., without overlapping itself), the adhesive can be applied uniformly to the electrode assembly. As a result, the adhesive application quality can be improved, and air bubbles that may occur in the region where the adhesive is applied in an overlapping manner can be prevented even though the case, the adhesive, and the electrode assembly are pressed.

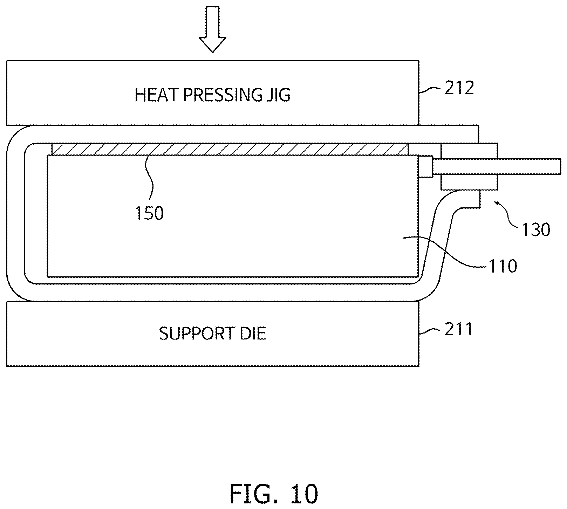

FIG. 10 is a diagram for describing a step of pressing the case 130, the adhesive 150, and the electrode assembly 110 according to one or more embodiments of the present disclosure. Referring to FIG. 10, the electrode assembly 110, the adhesive 150, and the case 130 may be pressed through a support die 211 and a heat pressing jig 212.

In one or more embodiments, the electrode assembly 110, the adhesive 150 applied to the electrode assembly 110, and the case 130 may be pressed by the heat pressing jig 212 after being placed on the support die 211. In one or more embodiments, because the adhesive 150 is applied to the electrode assembly 110 to not to overlap each other (e.g., to not overlap itself), even though the electrode assembly 110, the adhesive 150, and the case 130 are pressed by the heat pressing jig 212, a region where the adhesive 150 overlaps each other (e.g., overlaps itself) may not be formed or may be minimized. When the electrode assembly 110, the adhesive 150, and the case 130 are pressed by the heat pressing jig 212, the adhesive 150 may be spread out. In one or more embodiments, because an empty space where the adhesive 150 is not applied is filled, a contact area between the electrode assembly 110 and the case 130 increases, and the adhesive strength can be improved.

In one or more embodiments, the adhesive 150 may be applied to at least one surface of the electrode assembly 110 except for the regions corresponding to the regions where the first electrode tab and/or the second electrode tab are disposed. The thickness of the secondary battery can be increased by the first electrode tab and/or the second electrode tab, but because the adhesive 150 is not applied in the regions corresponding to the electrode tabs, the thickness of the secondary battery can be prevented from increasing excessively. Even though the electrode assembly 110, the adhesive 150, and the case 130 are pressed by the heat pressing jig 212, a local pressure may not be applied to the regions of the electrode assembly 110 corresponding to the electrode tab.

As an application range of the secondary batteries to mobile devices expands, cases of dropping devices using the secondary batteries occur frequently in various usage environments. As described above, the battery installed in the device may be damaged by the impact when the product is dropped, and a short circuit, smoking, or ignition may be caused. In particular, in the case of polymer batteries, because a pouch is used as an outer material of the battery, these batteries may easily become deformed. Accordingly, a method capable of stably fixing the case and the electrode assembly even when the product is dropped may be desirable.

According to some embodiments of the present disclosure, with a configuration in which the adhesive is applied in a predetermined pattern to the electrode assembly, the adhesive can be uniformly applied to the electrode assembly. The adhesive may be applied in the predetermined pattern, and thus, the overlapping region may not be formed even though the adhesive is applied in a form of a dot array. As a result, the application quality of the adhesive can be improved, and air bubbles that may occur in a region where the adhesive is applied in an overlapping manner can be prevented.

According to some embodiments of the present disclosure, because the adhesive can be uniformly applied to the electrode assembly, a probability of an adhesion failure of the secondary battery can be reduced. The overlapping region of the adhesive is minimized, and thus, a phenomenon in which the thickness of the electrode assembly is increased due to the overlapping of the adhesive can be prevented. As a result, an energy density of the secondary battery can be improved.

Although the present disclosure has been described above with respect to embodiments thereof, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### DESCRIPTION OF SOME REFERENCE SYMBOLS

- 100:: secondary battery
- 110:: electrode assembly
- 112:: negative electrode plate
- 114:: positive electrode plate
- 116:: separator
- 122:: negative electrode tab
- 124:: positive electrode tab
- 130:: case
- 132:: sealing part
- 142:: negative electrode lead
- 144:: positive electrode lead
- 150:: adhesive
- 160a:: first circular pattern
- 160b:: second circular pattern
- 162a:: first square pattern
- 162b:: second square pattern
- 164a:: first triangular pattern
- 164b:: second triangular pattern

## Claims

1. A secondary battery (100), comprising:
an electrode assembly (110) comprising a first electrode plate, a second electrode plate having a different polarity from the first electrode plate, and a separator (116) interposed between the first electrode plate and the second electrode plate;
a case (130) accommodating the electrode assembly (110) therein; and
an adhesive (150) in a predetermined pattern (160a, 160b, 162a, 162b, 164a, 164b) on at least one surface of the electrode assembly (110).

2. The secondary battery (100) as claimed in claim 1, wherein the predetermined pattern (160a, 160b, 162a, 162b, 164a, 164b) comprises a circular pattern (160a, 160b).

3. The secondary battery (100) as claimed in claim 2, wherein the circular pattern (160a, 160b) comprises a plurality of circles, each of the plurality of circles having a different diameter and a same center.

4. The secondary battery (100) as claimed in any one of the preceding claims, wherein the predetermined pattern (160a, 160b, 162a, 162b, 164a, 164b) comprises a square pattern (162a, 162b).

5. The secondary battery (100) as claimed in any one of the preceding claims, wherein the predetermined pattern (160a, 160b, 162a, 162b, 164a, 164b) comprises a triangular pattern (164a, 164b).

6. The secondary battery (100) as claimed in any one of the preceding claims, wherein a melting point of the adhesive (150) is greater than or equal to 77°C and less than or equal to 83°C.

7. The secondary battery (100) as claimed in any one of the preceding claims, wherein:
the first electrode plate comprises a plurality of positive electrode plates (114),
the second electrode plate comprises a plurality of negative electrode plates (112), and
the electrode assembly (110) has a stacked structure including the plurality of positive electrode plates (114), the plurality of negative electrode plates (112), the separator (116) being bent in a zigzag shape and interposed between the plurality of positive electrode plates (114) and the plurality of negative electrode plates (112) along a thickness direction thereof.

8. The secondary battery (100) as claimed in claim 7, wherein any one of the plurality of positive electrode plates (114) is at an outmost edge of the electrode assembly (110).

9. The secondary battery (100) as claimed in any one of the preceding claims, wherein the adhesive (150) is on two surfaces of the electrode assembly (110).

10. The secondary battery (100) as claimed in any one of the preceding claims, wherein the adhesive (150) does not overlap itself.

11. The secondary battery (100) as claimed in any one of the preceding claims, further comprising:
a first electrode tab (124) extending in a predetermined direction on the first electrode plate; and
a second electrode tab (122) extending in the predetermined direction on the second electrode plate,
wherein the adhesive (150) is on the electrode assembly (110) except for regions corresponding to the first electrode tab (124) and the second electrode tab (122).

12. The secondary battery (100) as claimed in any one of the preceding claims, further comprising:
a tape (160) covering at least a part of the electrode assembly (110),
wherein the adhesive (150) is on the electrode assembly (110) except for a region corresponding to the tape (160).

13. A method (S900) for manufacturing a secondary battery (100), the method comprising:
preparing (S910) an electrode assembly (110) and a case (130), the electrode assembly (110) comprising a first electrode plate, a second electrode plate having a different polarity from the first electrode plate, and a separator (116) between the first electrode plate and the second electrode plate;
applying (S920) an adhesive (150) in a predetermined pattern (160a, 160b, 162a, 162b, 164a, 164b) on the electrode assembly (110);
accommodating (S930) the electrode assembly (110) in the case (130); and
pressing (S940) the case (130), the adhesive (150), and the electrode assembly (110) together.

14. The method (S900) for manufacturing a secondary battery (100) as claimed in claim 13, wherein the predetermined pattern (160a, 160b, 162a, 162b, 164a, 164b) comprises a circular pattern (160a, 160b).

15. The method (S900) for manufacturing a secondary battery (100) as claimed in claim 14, wherein the circular pattern (160a, 160b) comprises a plurality of circles, each of the plurality of circles having a different diameter and a same center.
